# EUROPEAN PATENT SPECIFICATION

(11) **EP 4 566 810 B1**
(45) Date of publication and mention of the grant of the patent: **18.03.2026**
(21) Application number: 24215312.0
(22) Date of filing: 26.11.2024
(51) Int. Cl.: B32B 7/12, B32B 27/08, B32B 27/36, C08L 51/06, H01M 8/0284

(54) **ADHESIVE SEALING FILM FOR FUEL CELL**
KLEBENDE VERSIEGELUNGSFOLIE FÜR BRENNSTOFFZELLE
FILM D'ÉTANCHÉITÉ ADHÉSIF POUR PILE À COMBUSTIBLE

(30) Priority: 04.12.2023 JP 2023204411
(43) Date of publication of application: 11.06.2025
(73) Proprietor: Zacros Corporation, Tokyo 112-0002 (JP)
(72) Inventor: TAKAMURA, Satoshi, Tokyo, 112-0002 (JP); FUKUI, Hiroaki, Tokyo, 112-0002 (JP); CHISHIMA, Kenji, Tokyo, 112-0002 (JP)
(74) Representative: Godemeyer Blum Lenze Patentanwälte Partnerschaft mbB - werkpatent

(56) References cited:
- JP-A- 2019 137 853
- US-A1- 2021 277 287

## Description

### TECHNICAL FIELD

The present invention relates to an adhesive sealing film for a fuel cell.

### BACKGROUND ART

Among polyester resins, liquid crystal polymers have good hydrolysis resistance, but it is difficult for liquid crystal polymers having a crystal melting temperature of 280°C or higher to be kneaded with other resins to form a polymer alloy. Therefore, a resin composition obtained by polymer-alloying a low-melting-point liquid crystal polymer having a crystal melting temperature of 250°C or lower and another resin is commercially available (see, for example, Patent Documents 1 and 2).

Further, Patent Document 3 discloses a hot melt adhesive resin laminate.

### PRIOR ART DOCUMENTS

### Patent Documents

Patent Document 1: Japanese Unexamined Patent Application, First Publication No. 2019-214677
Patent Document 2: Japanese Unexamined Patent Application, First Publication No. 2022-083103
Patent Document 3: Japanese Unexamined Patent Application, First Publication No. 2019-137853

### SUMMARY OF THE INVENTION

### PROBLEM TO BE SOLVED BY THE INVENTION

A resin composition in which a low-melting-point liquid crystal polymer having a crystal melting temperature of 250°C or lower is finely dispersed has a problem that the tensile fracture stress of the resin composition is lowered due to the influence of decrease in hydrolysis resistance of the liquid crystal polymer, when the resin composition is stored or used under humid conditions.

The present invention has been made in view of the above circumstances, and an objective of the present invention is to provide an adhesive sealing film for a fuel cell using a resin composition capable of suppressing the decrease in the tensile fracture stress.

### MEANS FOR SOLVING THE PROBLEM

A first aspect is an adhesive sealing film for a fuel cell including: a base material layer containing a resin as a forming material; and an adhesive layer laminated on each of both surfaces of the base material layer with an intermediate layer interposed between the base material layer and the adhesive layer, in which the base material layer is formed of a resin composition containing a polyester resin other than a liquid crystal polymer, a low-melting-point liquid crystal polymer having a crystal melting temperature of 250°C or lower, and an acid-modified polyethylene resin, the intermediate layer is formed of an acid-modified polyethylene resin or an imine-modified polyolefin resin, and the adhesive layer is formed of an acid-modified polypropylene resin.

According to a second aspect, the base material layer in the first aspect contains an acid-modified polyolefin compound as a compatibilizer.

According to a third aspect, the intermediate layer in the first or second aspect contains an acid-modified polyolefin compound as a compatibilizer.

According to a fourth aspect, the base material layer in any one of the first to third aspects contains 40 to 60 parts by weight of the polyester resin other than a liquid crystal polymer, 20 to 40 parts by weight of the low-melting-point liquid crystal polymer, and 5 to 30 parts by weight of the acid-modified polyethylene resin, based on 100 parts by weight of the entire resin composition.

### EFFECTS OF INVENTION

According to the present invention, there can be provided an adhesive sealing film for a fuel cell using a resin composition capable of suppressing the decrease in the tensile fracture stress.

### BRIEF DESCRIPTION OF THE DRAWINGS

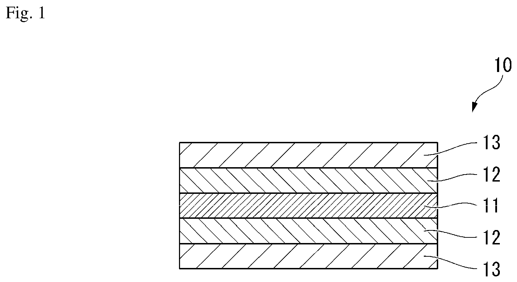

Fig. 1 is a cross-sectional view illustrating an adhesive sealing film for a fuel cell according to an embodiment.

### BEST MODE FOR CARRYING OUT THE INVENTION

Hereinafter, the present invention will be described based on suitable embodiments.

An adhesive sealing film 10 for a fuel cell of an embodiment includes a base material layer 11 containing a resin as a forming material, and an adhesive layer 13 laminated on each of both surfaces of the base material layer 11 with an intermediate layer 12 interposed between the base material layer 11 and the adhesive layer 13. The layer configuration of the adhesive sealing film 10 for a fuel cell includes five layers of adhesive layer 13/intermediate layer 12/base material layer 11/intermediate layer 12/adhesive layer 13.

The base material layer 11 is formed of a resin composition containing a polyester resin other than a liquid crystal polymer, a low-melting-point liquid crystal polymer having a crystal melting temperature of 250°C or lower, and an acid-modified polyethylene resin.

The base material layer 11 contains a polyester resin other than a liquid crystal polymer. Such a polyester resin is a non-liquid crystalline polyester resin, but may be, for example, a linear polyester resin obtained by condensation polymerization of a dicarboxylic acid component and a diol component.

Examples of the dicarboxylic acid component of the polyester resin include aromatic dicarboxylic acids such as terephthalic acid, isophthalic acid, naphthalene-1,4-dicarboxylic acid, and naphthalene-2,6-dicarboxylic acid; and aliphatic dicarboxylic acids such as adipic acid and sebacic acid.

Examples of the diol component of the polyester resin include linear diols such as ethylene glycol, 1,3-propanediol, 1,4-butanediol, 1,5-pentanediol, and 1,6-hexamethylenediol; branched diols such as neopentyl glycol, 2,2-dialkyl-1,3-propanediol; and cyclic diols such as cyclopentanedimethanol and cyclohexanedimethanol. Examples of the alkyl group of the side chain branched from the main chain of the branched diol include a methyl group, an ethyl group, a propyl group, and a butyl group.

Specific examples of the polyester resin include, but are not particularly limited to, polyethylene terephthalate, polybutylene terephthalate, polyethylene naphthalate, polybutylene naphthalate, polytrimethylene terephthalate, and modified polyesters obtained by modifying some of dicarboxylic acid components and/or diol components in these polyesters with other dicarboxylic acid components and/or diol components.

The base material layer 11 contains a low-melting-point liquid crystal polymer having a crystal melting temperature of 250°C or lower. The liquid crystal polymer is a thermoplastic resin exhibiting liquid crystallinity at the time of melting, and preferably contains a polyester resin. The polyester resin other than a liquid crystal polymer may be a thermoplastic resin that does not exhibit liquid crystallinity at the time of melting.

The low-melting-point liquid crystal polymer may be composed of only one kind of low-melting-point liquid crystal polymer, or may be a mixture of a plurality of kinds of low-melting-point liquid crystal polymers.

The low-melting-point liquid crystal polymer may be a liquid crystal polyester or a liquid crystal polyester amide that forms an anisotropic molten layer called a thermotropic liquid crystal polymer, and is preferably a liquid crystal polyester.

The crystal melting temperature of the low-melting-point liquid crystal polymer is the temperature of a crystal melting peak measured using a differential scanning calorimeter. The measurement method using a differential scanning calorimeter includes observing an endothermic peak temperature (Tm1) observed when measurement is performed under a temperature rising condition of 20°C/min from room temperature, maintaining a temperature that is higher than Tm1 by 20 to 50°C for 10 minutes, cooling the sample to room temperature under a temperature falling condition of 20°C/min, observing an endothermic peak when measurement is performed again under a temperature rising condition of 20°C/min, and defining a temperature indicating the peak top as the crystal melting temperature of the liquid crystal polymer. The crystal melting temperature of the low-melting-point liquid crystal polymer is 250°C or lower, preferably 160 to 240°C, more preferably 170 to 230°C, and particularly preferably 200 to 230°C.

Examples of a repeating unit constituting the low-melting-point liquid crystal polymer include an aromatic hydroxycarboxylic acid unit (-O-Ar-CO-), an aromatic dicarboxylic acid unit (-CO-Ar-CO-), an aromatic diol unit (-O-Ar-O-), an aromatic aminocarboxylic acid unit (-NH-Ar-CO-), an aromatic hydroxyamine unit (-O-Ar-NH-), an aromatic diamine unit (-NH-Ar-NH-), an aliphatic diol unit (-O-Ra-O-), and an aliphatic dicarboxylic acid unit (-O-Ra-O-). Here, -Ar- represents an aromatic group, and -Ra- represents an aliphatic group. The -CO- group contained in these units is not limited to one derived from a carboxylic acid (-CO-OH), and may be one derived from an acylated product (-CO-O-COR), an ester derivative (-CO-OR), an acid halide (-COX), or the like. In addition, the -O- group and the -NH- group are not limited to those derived from a hydroxy group (-OH) and an amino group (-NH₂), respectively, and may be those derived from acylated products (-O-COR and -NH-COR) or the like. Here, R represents an organic group such as an alkyl group or an aryl group, and X represents a halogen atom.

The repeating unit constituting these liquid crystal polymers may be only one kind or may be a combination of two or more kinds as long as a polyester is established as a low-melting-point liquid crystal polymer, but it is desirable that the repeating unit contains at least one hydroxycarboxylic acid unit. The low-melting-point liquid crystal polymer is preferably a wholly aromatic low-melting-point liquid crystal polymer in which all of the repeating units contain an aromatic group.

Specific examples of the aromatic hydroxycarboxylic acid unit include units derived from 4-hydroxybenzoic acid, 3-hydroxybenzoic acid, 2-hydroxybenzoic acid, 6-hydroxy-2-naphthoic acid, 5-hydroxy-2-naphthoic acid, 7-hydroxy-2-naphthoic acid, 3-hydroxy-2-naphthoic acid, 4'-hydroxyphenyl-4-benzoic acid, 3'-hydroxyphenyl-4-benzoic acid, 4'-hydroxyphenyl-3-benzoic acid, and alkyl, alkoxy, or halogen-substituted products thereof. Among these, units derived from one or more selected from the group consisting of 4-hydroxybenzoic acid and 6-hydroxy-2-naphthoic acid are preferable from the viewpoint of easily adjusting the heat resistance, mechanical strength, and melting point of the resulting liquid crystal polymer.

Specific examples of the aromatic dicarboxylic acid unit include units derived from terephthalic acid, isophthalic acid, 2,6-naphthalenedicarboxylic acid, 1,6-naphthalenedicarboxylic acid, 2,7-naphthalenedicarboxylic acid, 4,4'-dicarboxybiphenyl, 3,4'-dicarboxybiphenyl, 4,4"-dicarboxyterphenyl, and alkyl, alkoxy, or halogen-substituted products thereof. Among these, units derived from one or more selected from the group consisting of terephthalic acid, isophthalic acid, and 2,6-naphthalenedicarboxylic acid are preferable, and a terephthalic acid unit or a 2,6-naphthalenedicarboxylic acid unit is more preferable from the viewpoint of effectively enhancing the heat resistance of the resulting liquid crystal polymer.

Specific examples of the aromatic diol unit include units derived from hydroquinone, resorcin, 2,6-dihydroxynaphthalene, 2,7-dihydroxynaphthalene, 1,6-dihydroxynaphthalene, 3,3'-dihydroxybiphenyl, 3,4'-dihydroxybiphenyl, 4,4'-dihydroxybiphenyl, 4,4'-dihydroxybiphenyl ether, 2,2'-dihydroxybinaphthyl, and alkyl, alkoxy, or halogen-substituted products thereof. Among them, units derived from one or more selected from the group consisting of hydroquinone, resorcin, 4,4'-dihydroxybiphenyl, and 2,6-dihydroxynaphthalene are preferable, and units derived from one or more selected from the group consisting of hydroquinone, 4,4'-dihydroxybiphenyl, and 2,6-dihydroxynaphthalene are more preferable from the viewpoint of excellent reactivity during polymerization.

Specific examples of the aliphatic diol unit include units derived from ethylene glycol, 1,4-butanediol, and 1,6-hexanediol. In addition, at the time of production, a polymer containing an aliphatic diol such as polyethylene terephthalate or polybutylene terephthalate may be reacted with the aromatic hydroxycarboxylic acid, the aromatic dicarboxylic acid, the aromatic diol, and an acylated product, an ester derivative, an acid halide, or the like thereof.

Specific examples of the aliphatic dicarboxylic acid unit include units derived from oxalic acid, malonic acid, succinic acid, glutaric acid, adipic acid, pimelic acid, suberic acid, azelaic acid, sebacic acid, dodecanedioic acid, tetradecanedioic acid, fumaric acid, maleic acid, 1,4-cyclohexanedicarboxylic acid, and hexahydroterephthalic acid. Among these, units derived from oxalic acid, succinic acid, adipic acid, suberic acid, sebacic acid, dodecanedioic acid, and 1,4-cyclohexanedicarboxylic acid are preferable from the viewpoint of excellent reactivity during polymerization.

The base material layer 11 contains an acid-modified polyethylene resin. Examples of the polyethylene include low density polyethylene, high density polyethylene, and linear low density polyethylene. The proportion of the acid-modified polyethylene resin in the base material layer 11 is, for example, 5 to 30 wt%.

Examples of the method for producing the acid-modified polyethylene resin include a method of graft-modifying a polyethylene resin that is not acid-modified and an acid functional group-containing monomer by melt-kneading, and a method of copolymerizing an ethylene monomer and an acid functional group-containing monomer.

Examples of the acid functional group-containing monomer include a carboxylic acid group-containing monomer and an acid anhydride group-containing monomer. Examples of the carboxylic acid group-containing monomer include α,β-unsaturated carboxylic acid monomers such as acrylic acid, methacrylic acid, maleic acid, nadic acid, fumaric acid, itaconic acid, citraconic acid, crotonic acid, isocrotonic acid, tetrahydrophthalic acid, and endo-bicyclo[2.2.1]-5-heptene-2,3-dicarboxylic acid (endic acid).

Examples of the acid anhydride group-containing monomer include unsaturated dicarboxylic acid anhydride monomers such as maleic anhydride, nadic anhydride, itaconic anhydride, citraconic anhydride, and endic anhydride.

Examples of the method for producing the resin composition of the base material layer 11 include a method of blending a polyester resin, a low-melting-point liquid crystal polymer, and an acid-modified polyethylene resin by a method such as melt-kneading. Two of three types of the polyester resin, the low-melting-point liquid crystal polymer, and the acid-modified polyethylene resin may be blended first, and then the remaining one type may be added and blended. The melt-kneading apparatus is not particularly limited, but a single screw extruder, a multi-screw extruder, a Banbury mixer, a plast mill, a heated roll kneader, or the like can be used. Furthermore, the polyester resin, the low-melting-point liquid crystal polymer, and the acid-modified polyolefin can also be blended by performing dry-blending and then forming a film by an extruder or the like.

As a result of blending, the resin composition of the base material layer 11 may form a sea-island structure in which the polyester resin constitutes a sea part, and the low-melting-point liquid crystal polymer and the acid-modified polyethylene resin respectively constitute an island part. Since the acid-modified polyethylene resin is well dispersed in the polyester resin and the low-melting-point liquid crystal polymer, hydrolysis of ester bonds and the like contained in the polyester resin and the low-melting-point liquid crystal polymer can be suppressed even in a high-temperature and high-humidity environment such as during thermal molding. Furthermore, it is possible to suppress a decrease in tensile fracture stress of the resin composition.

It is preferable to contain 40 to 60 parts by weight of the polyester resin other than a liquid crystal polymer, 20 to 40 parts by weight of the low-melting-point liquid crystal polymer, and 5 to 30 parts by weight of the acid-modified polyethylene resin, based on 100 parts by weight of the entire resin composition of the base material layer 11. The proportion of the polyester resin other than a liquid crystal polymer is preferably larger than the proportion of the low-melting-point liquid crystal polymer, and the proportion of the low-melting-point liquid crystal polymer is preferably larger than the proportion of the acid-modified polyethylene resin.

The resin composition of the base material layer 11 may contain an optional component. Examples of the optional resin component include a polyolefin resin, an olefin-based elastomer, and a styrene-based elastomer. The additive is not particularly limited, and examples thereof include a filler, a colorant, an antioxidant, an antifoaming agent, a leveling agent, and a light absorber.

The resin composition of the base material layer 11 may contain an acid-modified polyolefin compound as a compatibilizer. An example of the acid-modified polyolefin compound is an acid-modified polyolefin having a molecular weight selected from the range of 9000 to 160000. An example of the acid-modified polyethylene resin of the base material layer 11 is an acid-modified polyethylene having a molecular weight of 200000 or more. The proportion of the compatibilizer in the base material layer 11 is 1 to 3 wt%.

The resin composition of the base material layer 11 may have a chemical composition containing no high-melting-point liquid crystal polymer having a crystal melting temperature of higher than 250°C. Further, the resin composition of the base material layer 11 may have a chemical composition containing no resin component having a melting temperature (melting point) of higher than 250°C. The thickness of the base material layer 11 is not particularly limited, and is, for example, 60 to 120 µm.

The intermediate layer 12 is formed of an acid-modified polyethylene resin or an imine-modified polyolefin resin.

Examples of the acid-modified polyethylene resin of the intermediate layer 12 include a graft polymer obtained by graft-modifying a polyethylene resin that is not acid-modified and an acid functional group-containing monomer by melt-kneading, and a copolymer obtained by copolymerizing an ethylene monomer and an acid functional group-containing monomer. Examples of the acid functional group-containing monomer include the carboxylic acid group-containing monomer and the acid anhydride group-containing monomer. Examples of the polyethylene include low density polyethylene, high density polyethylene, and linear low density polyethylene.

An example of the imine-modified polyolefin resin of the intermediate layer 12 is a polymer compound obtained by modifying a polyolefin resin such as a polyethylene resin or polypropylene with an imine compound.

The intermediate layer 12 can improve adhesive strength (interlayer peeling strength) between the base material layer 11 and the adhesive layer 13. The thickness of the intermediate layer 12 is not particularly limited, and is, for example, 1 to 20 µm. The acid-modified polyethylene resin contained in the intermediate layer 12 may have the same grade as or a different grade from the acid-modified polyethylene resin contained in the base material layer 11.

The intermediate layer 12 may contain an acid-modified polyolefin compound as a compatibilizer. An example of the acid-modified polyolefin compound is an acid-modified polyolefin having a molecular weight selected from the range of 9000 to 160000. An example of the acid-modified polyethylene resin of the intermediate layer 12 is an acid-modified polyethylene having a molecular weight of 200000 or more. The proportion of the compatibilizer in the intermediate layer 12 is 1 to 3 wt%.

The resin composition of the intermediate layer 12 may contain an optional component. Examples of the optional resin component include a polyolefin resin, an olefin-based elastomer, and a styrene-based elastomer. The additive is not particularly limited, and examples thereof include a filler, a colorant, an antioxidant, an antifoaming agent, a leveling agent, and a light absorber.

The adhesive layer 13 is formed of an adhesive polypropylene resin such as an acid-modified polypropylene resin. Examples of the acid-modified polypropylene resin include a graft polymer obtained by graft-modifying a polypropylene resin that is not acid-modified and an acid functional group-containing monomer by melt-kneading, and a copolymer obtained by copolymerizing a polypropylene monomer and an acid functional group-containing monomer. Examples of the acid functional group-containing monomer include the carboxylic acid group-containing monomer and the acid anhydride group-containing monomer. Examples of the polypropylene include homopolypropylene, block polypropylene, and random polypropylene.

The adhesive layer 13 can obtain good adhesiveness to an adherend of the adhesive sealing film 10 for a fuel cell. The thickness of the adhesive layer 13 is not particularly limited, and is, for example, 10 to 40 µm.

The resin composition of the adhesive layer 13 may contain an optional component. Examples of the optional resin component include a polyolefin resin, an olefin-based elastomer, and a styrene-based elastomer. The additive is not particularly limited, and examples thereof include a filler, a colorant, an antioxidant, an antifoaming agent, a leveling agent, and a light absorber. As the antioxidant, a phenol-based antioxidant, a phosphite-based antioxidant, a thioether-based antioxidant, and the like can be used individually or in combination.

In particular, it is preferable to add an antioxidant to a resin layer as the outermost layer.

The adhesive sealing film 10 for a fuel cell of an embodiment can be used as an adhesive material, a sealing material, or the like in a fuel cell. The adhesive sealing film 10 for a fuel cell of an embodiment can be suitably applied to, for example, a gasket of a fuel cell.

As an electrolyte membrane of a fuel cell, a known or commercially available solid polymer electrolyte membrane can be used. Examples thereof include a hydrogen ion conductive polymer electrolyte, a perfluorosulfonic acid-based fluorine ion exchange resin, and an anionic conductive solid polymer electrolyte membrane. On the surface of the electrolyte membrane, a catalyst layer of platinum, a platinum alloy, a platinum compound, or the like is laminated as a cathode catalyst or an anode catalyst. In a cell of a fuel cell, a gasket is disposed on each of both surfaces of a membrane electrode assembly including an electrolyte membrane and a catalyst layer with a sub-gasket interposed between the gasket and the membrane electrode assembly. The sub-gasket and the gasket are formed in an annular or frame shape so as to surround the outer periphery of the membrane electrode assembly.

### EXAMPLES

Hereinafter, the present invention will be specifically described with reference to examples.

### <Base material layer>

A polymer alloy of a polyester resin and a low-melting-point liquid crystal polymer, and an acid-modified polyethylene resin were melt-kneaded, and the obtained resin composition was molded into a film shape having a thickness of 90 µm to obtain a base material layer.

As the polyester resin and the low-melting-point liquid crystal polymer, a polymer alloy (trade name: TECROS (registered trademark) T-440HS, manufactured by Ueno Fine Chemicals Industry, Ltd., "PET/LCP" in Table) obtained by blending polyethylene terephthalate (PET) and a liquid crystal polymer (LCP) at a weight ratio of 60:40 was used. The liquid crystal polymer contained in this polymer alloy is a low-melting-point liquid crystal polymer having a crystal melting temperature of 220°C.

As the acid-modified polyethylene resin, a commercially available acid-modified polyethylene (trade name: ADMER (registered trademark) SF728, manufactured by Mitsui Chemicals, Inc., "APE" in Table) was used. In No. 1, only PET/LCP (without APE) was used. In No. 2, PET/LCP and APE were used at a weight ratio of 90:10. In No. 3, PET/LCP and APE were used at a weight ratio of 80:20.

The tensile fracture stress was measured for a sample obtained by punching the obtained film of the base material layer into a No. 5 dumbbell shape under the conditions of a distance between chucks: 80 mm, a distance between gauge lines: 45 mm, and a tensile speed: 300 mm/min. Each sample was prepared so that the tensile direction was an MD direction (flow direction) or a TD direction (width direction), and then the tensile fracture stress was determined from the cross-sectional area (width: 6 mm, thickness: 0.09 mm) at a portion where the width of the sample was narrow.

The pressure cooker test (PCT) was performed under the conditions of 110°C, 85% RH, and 96 h. For the same sample, the tensile fracture stress was measured before and after PCT, and the maintenance rate before and after PCT was calculated. This maintenance rate is determined by (tensile fracture stress after PCT)/(tensile fracture stress before PCT) × 100 (%). The measurement results of the tensile fracture stress are shown in Table 1.

**[Table 1]**

| No. | Base material layer (90 µm) | Measurement direction | Tensile fracture stress (MPa) | | Maintenance rate (%) |
|---|---|---|---|---|---|
| | | | Before PCT | After PCT | |
| 1 | PET/LCP (100) | MD | 105.4 | 51.9 | 49.2 |
| | | TD | 63.1 | 23.0 | 36.5 |
| 2 | PET/LCP (90) | MD | 80.0 | 78.8 | 98.4 |
| | APE (10) | TD | 43.8 | 29.7 | 67.9 |
| 3 | PET/LCP (80) | MD | 202.7 | 212.1 | 104.6 |
| | APE (20) | TD | 35.0 | 28.0 | 80.1 |

As shown in Table 1, it was confirmed that the decrease in tensile fracture stress after PCT can be suppressed by blending the acid-modified polyethylene resin.

### <Adhesive sealing film for fuel cell>

An adhesive sealing film for a fuel cell including five layers of adhesive layer/intermediate layer/base material layer/intermediate layer/adhesive layer was prepared. The thickness of the intermediate layer was 5 µm, and the thickness of the adhesive layer was 25 µm.

As the intermediate layers of Nos. 1 to 3, APE of the same grade as the acid-modified polyethylene resin used for the base material layer was used. In the intermediate layers of Nos. 4 to 6, APE and a compatibilizer were blended at a weight ratio of 98:2. The compatibilizers used are C1 (trade name: UMEX (registered trademark) 1001, manufactured by Sanyo Chemical Industries, Ltd., acid-modified polypropylene resin) for No. 4, C2 (trade name: RIKEAID (registered trademark) MG-670P, manufactured by Riken Vitamin Co., Ltd., acid-modified polypropylene resin) for No. 5, and C3 (trade name: RIKEAID (registered trademark) KG-005P, manufactured by Riken Vitamin Co., Ltd., silica-based polypropylene resin) for No. 6.

As the adhesive layer, there was used a resin composition obtained by blending two kinds of acid-modified polypropylene resins (trade name: ADMER (registered trademark) QE060, manufactured by Mitsui Chemicals, Inc., "APP1" in Table; and trade name: ADMER (registered trademark) QF575, manufactured by Mitsui Chemicals, Inc., "APP2" in Table) with an antioxidant (a mixture of a phenol-based, phosphite-based, and thioether-based antioxidants) at a weight ratio of 55:40:5, and adding the blend in an amount of 3500 ppm to the resin content of the adhesive layer.

The interlayer peeling strength of the adhesive sealing film for a fuel cell was measured with an average of N = 3 (average value of values obtained by measuring three times). The results are shown in Table 2.

**[Table 2]**

| No. | Base material layer (90 µm) | Intermediate layer (5 µm) | Adhesive layer (25 µm) | Interlayer peeling strength (N/15 mm) |
|---|---|---|---|---|
| | | | | Average of N = 3 |
| 1 | PET/LCP (100) | APE (100) | APP1 (60) | 3.6 |
| | | | APP2 (40) | |
| | | | Antioxidant | |
| 2 | PET/LCP (90) | APE (100) | APP1 (60) | 4.2 |
| | | | APP2 (40) | |
| | APE (10) | | Antioxidant | |
| 3 | PET/LCP (80) | APE (100) | APP1 (60) | 3.7 |
| | | | APP2 (40) | |
| | APE (20) | | Antioxidant | |
| 4 | PET/LCP (90) | APE (98) | APP1 (60) | 4.7 |
| | | | APP2 (40) | |
| | APE (10) | C1 (2) | Antioxidant | |
| 5 | PET/LCP (90) APE | APE (98) | APP1 (60) | 5.0 |
| | | | APP2 (40) | |
| | (10) | C2 (2) | Antioxidant | |
| 6 | PET/LCP (90) | APE (98) | APP1 (60) | 5.1 |
| | | | APP2 (40) | |
| | APE (10) | C3 (2) | Antioxidant | |

As shown in Table 2, the sample of No. 2 had the highest interlayer peeling strength when a compatibilizer was not used. When a compatibilizer was used, the interlayer peeling strength was further improved.

### DESCRIPTION OF THE REFERENCE NUMERALS

- 10: Adhesive sealing film for fuel cell
- 11: Base material layer
- 12: Intermediate layer
- 13: Adhesive layer

## Claims

1. An adhesive sealing film for a fuel cell comprising: a base material layer including a resin as a forming material; and an adhesive layer laminated on each of both surfaces of the base material layer with an intermediate layer interposed between the base material layer and the adhesive layer, wherein
the base material layer is formed of a resin composition containing a polyester resin other than a liquid crystal polymer, a low-melting-point liquid crystal polymer having a crystal melting temperature of 250°C or lower, and an acid-modified polyethylene resin,
the intermediate layer is formed of an acid-modified polyethylene resin or an imine-modified polyolefin resin, and
the adhesive layer is formed of an acid-modified polypropylene resin.

2. The adhesive sealing film for a fuel cell according to claim 1, wherein the base material layer contains an acid-modified polyolefin compound as a compatibilizer.

3. The adhesive sealing film for a fuel cell according to claim 1, wherein the intermediate layer contains an acid-modified polyolefin compound as a compatibilizer.

4. The adhesive sealing film for a fuel cell according to claim 1, wherein the base material layer contains 40 to 60 parts by weight of the polyester resin other than a liquid crystal polymer, 20 to 40 parts by weight of the low-melting-point liquid crystal polymer, and 5 to 30 parts by weight of the acid-modified polyethylene resin, based on 100 parts by weight of the entire resin composition.

## Patentansprüche

1. Klebende Versiegelungsfolie für eine Brennstoffzelle, umfassend:
eine Basismaterialschicht, die ein Harz als Formmaterial enthält; und eine Klebeschicht, die auf jede der beiden Oberflächen der Basismaterialschicht laminiert ist, wobei zwischen der Basismaterialschicht und der Klebeschicht eine Zwischenschicht angeordnet ist, wobei
die Basismaterialschicht aus einer Harzzusammensetzung gebildet ist, die ein Polyesterharz, das kein Flüssigkristallpolymer ist, ein Flüssigkristallpolymer mit niedrigem Schmelzpunkt und einer Kristallschmelztemperatur von 250 °C oder weniger und ein säuremodifiziertes Polyethylenharz enthält,
die Zwischenschicht aus einem säuremodifizierten Polyethylenharz oder einem iminmodifizierten Polyolefinharz gebildet ist, und
die Klebeschicht aus einem säuremodifizierten Polypropylenharz gebildet ist.

2. Die klebende Versiegelungsfolie für eine Brennstoffzelle gemäß Anspruch 1, wobei die Basismaterialschicht eine säuremodifizierte Polyolefinverbindung als Kompatibilisierungsmittel enthält.

3. Die klebende Versiegelungsfolie für eine Brennstoffzelle gemäß Anspruch 1, wobei die Zwischenschicht eine säuremodifizierte Polyolefinverbindung als Kompatibilisierungsmittel enthält.

4. Die klebende Versiegelungsfolie für eine Brennstoffzelle gemäß Anspruch 1, wobei die Basismaterialschicht 40 bis 60 Gewichtsteile des Polyesterharzes, das kein Flüssigkristallpolymer ist, 20 bis 40 Gewichtsteile des niedrigschmelzenden Flüssigkristallpolymers und 5 bis 30 Gewichtsteile des säuremodifizierten Polyethylenharzes, bezogen auf 100 Gewichtsteile der gesamten Harzzusammensetzung, enthält.

## Revendications

1. Film d'étanchéité adhésif pour pile à combustible comprenant : une couche de matériau de base comprenant une résine comme matériau de formation ; et une couche adhésive stratifiée sur chacune des deux surfaces de la couche de matériau de base avec une couche intermédiaire interposée entre la couche de matériau de base et la couche adhésive, dans lequel
la couche de matériau de base est formée d'une composition de résine contenant une résine polyester autre qu'un polymère à cristaux liquides, un polymère à cristaux liquides à bas point de fusion ayant une température de fusion cristalline de 250 °C ou moins, et une résine polyéthylène modifiée à l'acide,
la couche intermédiaire est formée d'une résine polyéthylène modifiée à l'acide ou d'une résine polyoléfine modifiée à l'imine, et
la couche adhésive est formée d'une résine polypropylène modifiée à l'acide.

2. Film d'étanchéité adhésif pour pile à combustible selon la revendication 1, dans lequel la couche de matériau de base contient un composé polyoléfinique modifié à l'acide en tant qu'agent de compatibilité.

3. Film d'étanchéité adhésif pour pile à combustible selon la revendication 1, dans lequel la couche intermédiaire contient un composé polyoléfinique modifié à l'acide en tant qu'agent de compatibilité.

4. Film d'étanchéité adhésif pour pile à combustible selon la revendication 1, dans lequel la couche de matériau de base contient 40 à 60 parties en poids de la résine polyester autre qu'un polymère à cristaux liquides, 20 à 40 parties en poids du polymère à cristaux liquides à bas point de fusion et 5 à 30 parties en poids de la résine polyéthylène modifiée à l'acide, sur la base de 100 parties en poids de la composition de résine totale.
